Europäisches Patentamt

European Patent Office

Office européen des brevets

(19)

(11)  EP 1 441 455 A2

(12)  **EUROPEAN PATENT APPLICATION**

(43) Date of publication:
    **28.07.2004  Bulletin 2004/31**

(51) Int Cl.⁷: **H04B 10/18**, G02B 6/34

(21) Application number: **04001559.6**

(22) Date of filing: **26.01.2004**

(84) Designated Contracting States:
    **AT BE BG CH CY CZ DE DK EE ES FI FR GB GR
    HU IE IT LI LU MC NL PT RO SE SI SK TR**
    Designated Extension States:
    **AL LT LV MK**

(30) Priority:  **27.01.2003  JP 2003018051**

(71) Applicant: **FUJITSU LIMITED
    Kawasaki-shi, Kanagawa 211-8588 (JP)**

(72) Inventors:
    • **Nakamoto, Ken-ichi c/o Fujitsu Limited
      Kawasaki-shi, Kanagawa 211-8588 (JP)**

• **Yoshida, Setsuo c/o Fujitsu Network Techn.
  Limited
  Yokohama-shi, Kanagawa 222-0033 (JP)**
• **Onaka, Hiroshi c/o Fujitsu Limited
  Kawasaki-shi, Kanagawa 211-8588 (JP)**

(74) Representative: **HOFFMANN - EITLE
    Patent- und Rechtsanwälte
    Arabellastrasse 4
    81925 München (DE)**

(54)    **Mach-Zehnder interferometer type optical filter and control method thereof**

(57)    In an optical filter configured by serially connecting three Mach-Zehnder interferometers, an amount of a change in the optical path to be assigned to two optical path change units to control the filter extinction ratio of the optical filter is set based on an equation indicating the relationship among the filter average insertion loss and the filter extinction ratio of the optical filter and the amount of a change in the optical path provided for the two optical path change units.

F I G. 9

**Description**

**Background of the Invention**

The present invention relates to an optical gain equalizer used in a wavelength division multiplexing transmission system (hereinafter referred to as a WDM (wavelength division multiplexing) system, and more specifically to the technology of controlling an optical gain equalizer.

**Description of the Related Art**

Recently, as optical fiber producing technology has been progressing, a low-loss optical fiber has been developed, thereby successfully putting an optical fiber communications system to practical use. Additionally, an optical amplifier for amplifying a signal light has become commercially practical as a device for compensating for the loss of an optical fiber transmission line for realization of a long-haul transmission. On the other hand, there is a WDM system as a method of increasing the capacity of a transmission line. A WDM system refers to a system for multiplexing a signal light having a plurality of different frequencies (wavelengths), and transmitting it using an optical fiber.

When an optical amplifier for collectively amplifying the multiplexed signal light, the dependency on the gain frequency (wavelength) of an optical amplifier makes the signal light power after passing through the optical amplifier depends on the frequency (wavelength). Furthermore, when a number of optical amplifiers are connected in series, the deviation of the signal light power is accumulated. Thus, the resultant deviation of signal light power and the optical signal to noise ratio (OSNR) limits the transmission distance, and causes the deterioration of the receiving sensitivity at the reception terminal.

There is the following first invention as the technology of removing the noise to extend the transmission distance. The first invention includes a signal light whose oscillation frequency changes by the optical intensity of intensity-modulated input light, and an optical pulse waveform shaping device having an optical filter indicating one of two transmittance values to the optical frequency after introducing the output light of the semiconductor laser. With the above-mentioned configuration, the optical filter enters a stopping mode for the output frequency of the semiconductor laser when the input light intensity is low, and enters a transmitting mode when the input light intensity is somewhat high, and the output frequency of the semiconductor laser has changed. Thus, an optical pulse waveform shaping device having a high extinction ratio and a high noise-reduction effect can be realized. The optical filter can include a Mach-Zehnder interferometer which has a ring resonator provided for one of two optical waveguides having different optical paths, branches the input light, and wavelength-multiplexes the light after transmitting it to the two optical waveguides (for example, refer to the Patent document 1).

On the other hand, to extend the transmission distance, an optical gain equalizer has been proposed and been developed to good purpose as a compensating optical part for compensating for the dependency on the gain/ loss frequency (wavelength) of the optical amplifier and the transmission line fiber.

Conventionally, an optical gain equalizer configured by connecting in series a plurality of periodic filters having different free spectral ranges (hereinafter referred to as FSR) of transmittance characteristics on the frequency (wavelength) axis has been proposed. Among some suggested examples, an optical gain equalizer having a plurality of Mach-Zehnder interferometer type optical filters as periodic filters connected in series has been emphasized because it enables a smaller and low-cost equalizer. A periodic filter has variable transmittance characteristics like a sine wave on the frequency (wavelength) axis. Therefore, it is obvious according to the method of the Fourier theorem that a filter of an arbitrary form can be realized by superposing a plurality of sine waves having different periods. As a result, it is possible in principle to realize an optical gain equalizer having arbitrary transmittance characteristics by connecting a plurality of frequency filters having different FSR in series.

There is the second invention as the technology for an optical gain equalizer configured by connecting a plurality of Mach-Zehnder interferometer type optical filters in series. According to the second invention, by connecting a plurality of first and second Mach-Zehnder type optical filters having different FSR in series, the filter uniformity of the gain wavelength (or frequency) characteristics, which cannot be completely evened by the first Mach-Zehnder type optical filter, can be evened by the second Mach-Zehnder type optical filter having the FRS different from the FRS of the first Mach-Zehnder type optical filter. Thus, an optical gain equalizer capable of guaranteeing better transmission characteristics can be realized although there are a number of stages of optical amplifiers and their gains are considerably unbalanced (for example, refer to the Patent document 2).

[Patent document 1]

Japanese Patent Application Laid-open No. 7-321742 (scope of the claims for the patent, and abstract)

[Patent document 2]

Japanese Patent Application Laid-open No. 6-276154

[Patent document 3]

Japanese Patent Application Laid-open No. 5-61077

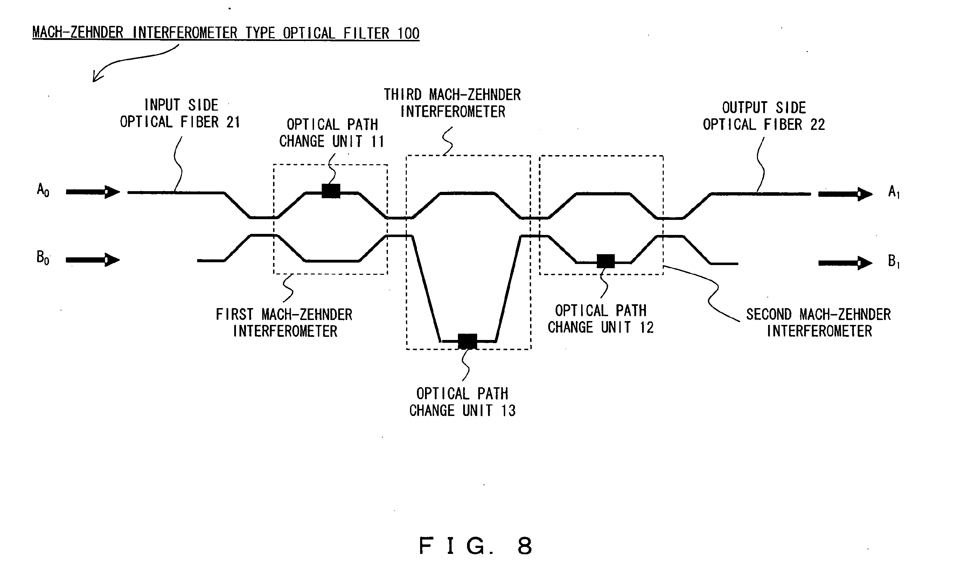

According to the above-mentioned conventional technology, it is possible to compensate for the dependency on the gain/loss frequency (wavelength) of an optical amplifier and a transmission line fiber, but a problem has existed with its control method. For easier explanation, a single-stage Mach-Zehnder interferometer type optical filter as shown in FIG. 8 is described below. In the Mach-Zehnder interferometer type optical filter as shown in FIG. 8, a first Mach-Zehnder interferometer, a second Mach-Zehnder interferometer, and a third Mach-Zehnder interferometer are connected in series. Furthermore, the first Mach-Zehnder interferometer is connected to an input side optical fiber 21, and the third Mach-Zehnder interferometer is connected to an output side optical fiber 22. Each Mach-Zehnder interferometer is provided with an optical path change unit. An optical path change unit 11 provided for the first Mach-Zehnder interferometer, and an optical path change unit 12 provided for the second Mach-Zehnder interferometer are used in controlling the filter extinction ratio, and an optical path change unit 13 provided for the third Mach-Zehnder interferometer is used in controlling the filter phase. In the conventional technology, when the optical filter as shown in FIG. 8 is controlled, an equal amount of a change in the optical path is assigned to the optical path change units 11 and 12 to control the extinction ratio because assigning different amounts of changes in the optical path to the optical path change units 11 and 12 allows large dependency on frequency (wavelength) of the filter extinction ratio, thereby reducing the transmittance characteristics like a sine wave of the filter.

Using the control method of the conventional technology, the filter average insertion loss fluctuates when the filter extinction ratio is controlled. Practically, when the filter extinction ratio increases, the filter average insertion loss also increases while the filter average insertion loss decreases with the decreasing filter extinction ratio. The control of the Mach-Zehnder interferometer type optical filter shown in FIG. 8 is described below by referring to a theoretical calculation. In the explanation below, the amount of a change in the optical path added to the optical path change units 11, 12, and 13 are assumed to be $\Delta L_1$, $\Delta L_2$, and $\Delta L_3$ respectively. It is also assumed that $A_0$ indicates an optical input terminal, and $A_1$ indicates an optical output terminal so that the full transmitting mode can be entered when $\Delta L_1 = \Delta L_2 = \Delta L_3 = 0(m)$, and it is convenient for the system. Control parameters of a filter can be a filter extinction ratio and a filter phase. $\Delta L_1$ and $\Delta L_2$ are used in controlling the filter extinction ratio, and $\Delta L_3$ is used in controlling the filter phase.

When $A_0 = 1$ and $B_0 = 0$, the optical output intensity

$P_{\alpha 1}$ at the upper waveguide terminal $A_1$ is expressed by the following equation (1).

$$
\begin{aligned}
P_{a1} &= |A_1|^2 \\
&= \frac{1}{8}(4 + 2\cos\{\frac{2\pi(\Delta L_1 - \Delta L_2)v}{c}\} + 2\cos\{\frac{2\pi(\Delta L_1 + \Delta L_2)v}{c}\} \\
&+ \cos[\frac{2\pi\{c - (\Delta L_1 + \Delta L_2 - \Delta L_3)\Delta v\}v}{c\Delta v}] - \cos[\frac{2\pi\{c + (\Delta L_1 - \Delta L_2 + \Delta L_3)\Delta v\}v}{c\Delta v}] \\
&- \cos[\frac{2\pi\{c + (-\Delta L_1 + \Delta L_2 + \Delta L_3)\Delta v\}v}{c\Delta v}] + \cos[\frac{2\pi\{c + (\Delta L_1 + \Delta L_2 + \Delta L_3)\Delta v\}v}{c\Delta v}]
\end{aligned}
$$

$$\cdots (1)$$

In the equation (1) above, c, v, and $\Delta v$ indicate the speed of light (m/s), the optical frequency (Hz), and the FSR (Hz) of a filter respectively.

As described above, in the conventional control method, the filter extinction ratio is controlled by satisfying and changing the condition of $\Delta L_1 = \Delta L_2$. Therefore, when $\Delta L1 = \Delta L_2 = \Delta L$ is set, and, since the control of the filter phase is not considered, $\Delta L_3 = 0$ is set to simplify the $P_{\alpha 1}$ in the equation (1) above, the following equation (2) is obtained.

$$
P_{a1} = \frac{1}{4}\{4 + (\cos\frac{2\pi v}{\Delta v} + 1)(\cos\frac{4\pi \Delta L v}{c} - 1)\} \tag{2}
$$

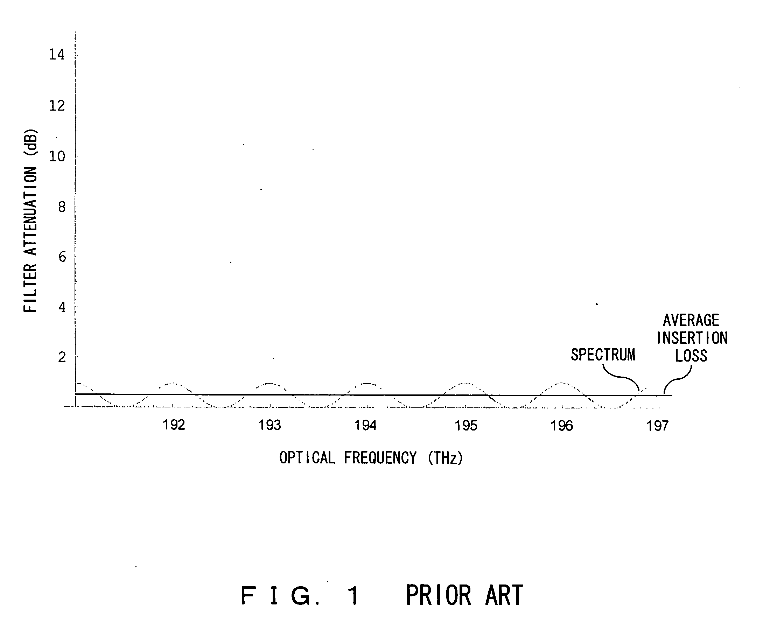

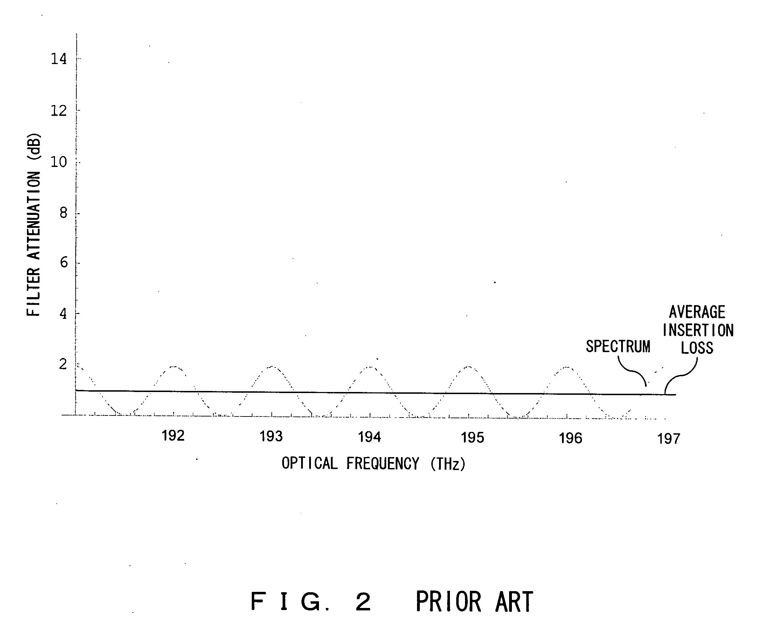

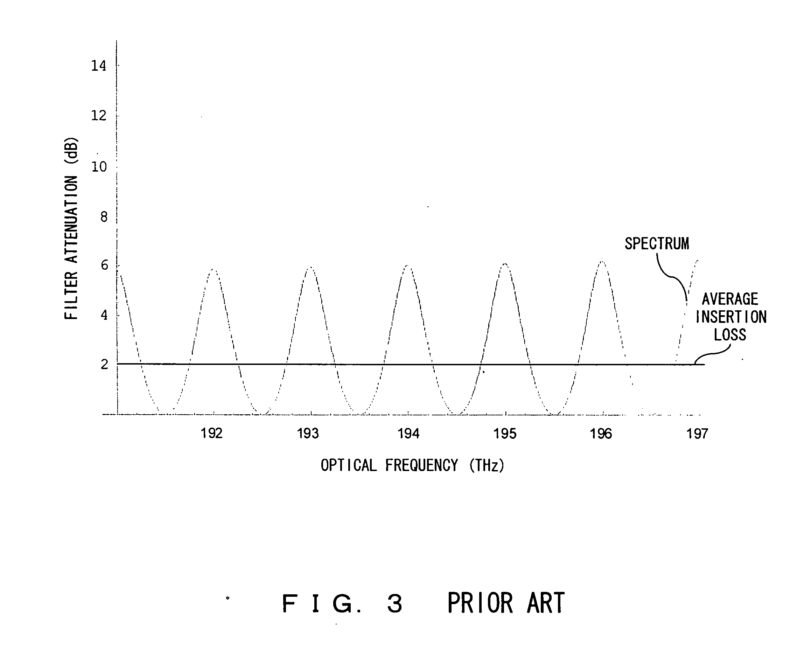

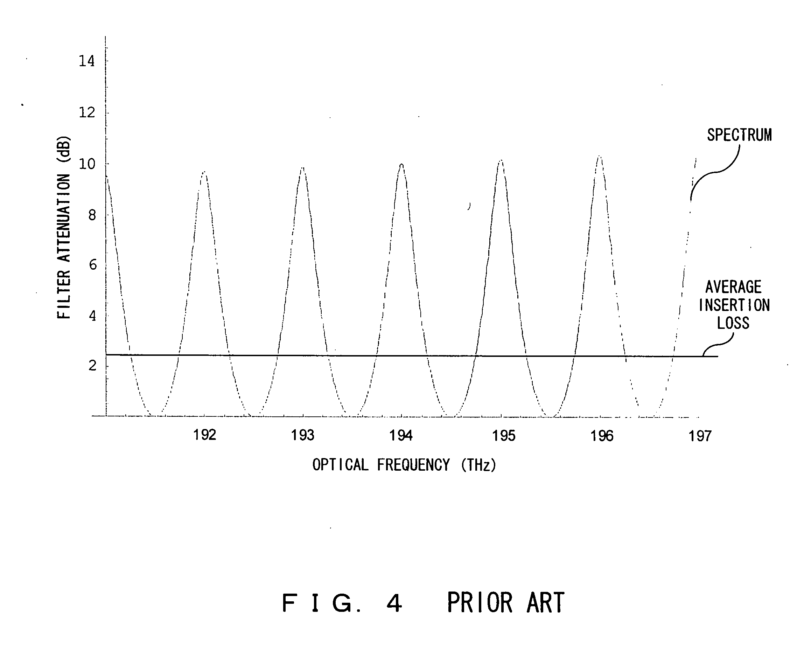

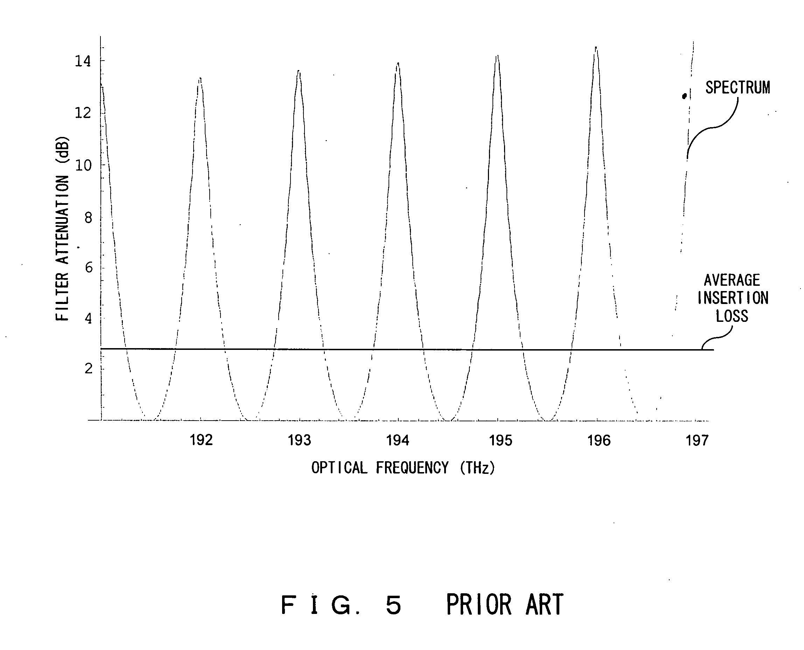

FIGS. 1 through 5 show the filter spectrum and the filter average insertion loss when $\Delta L$ is changed in the equation (2) above. FIGS. 1 and 5 show the filter spectra, and the filter average insertion losses with the filter extinction ratios of 1, 2, 6, 10, and 14 dB, and $\Delta L1$ of $1.15 \times 10^{-7}$, $1.6 \times 10^{-7}$, $2.58 \times 10^{-7}$, $3.08 \times 10^{-7}$, $3.37 \times 10^{-7}$ m. In FIGS. 1 through 5, the horizontal axis shows an optical frequency. The optical frequency range is assumed to be 191 through 197 THz, and $\Delta v = 1$ THz. The vertical axis indicates the filter attenuation, indicating the plot of $10\log_{10}(P_{\alpha 1})$ obtained by the logarithm of $P_{\alpha 1}$. The thin line indicates the filter spectrum, and the solid line indicates the filter average insertion loss.

In FIGS. 1 through 5, when the filter extinction ratio gradually grows from 1 to 14 dB (1, 2, 6, 10, 14 dB), the filter average insertion loss also gradually grows from about 0.5 to about 2.8 dB (0.5, 1, 2, 2.5, and 2.8 approximately). Thus, in the conventional technology, the filter average insertion loss changes with the control of the filter extinction ratio of the optical filter.

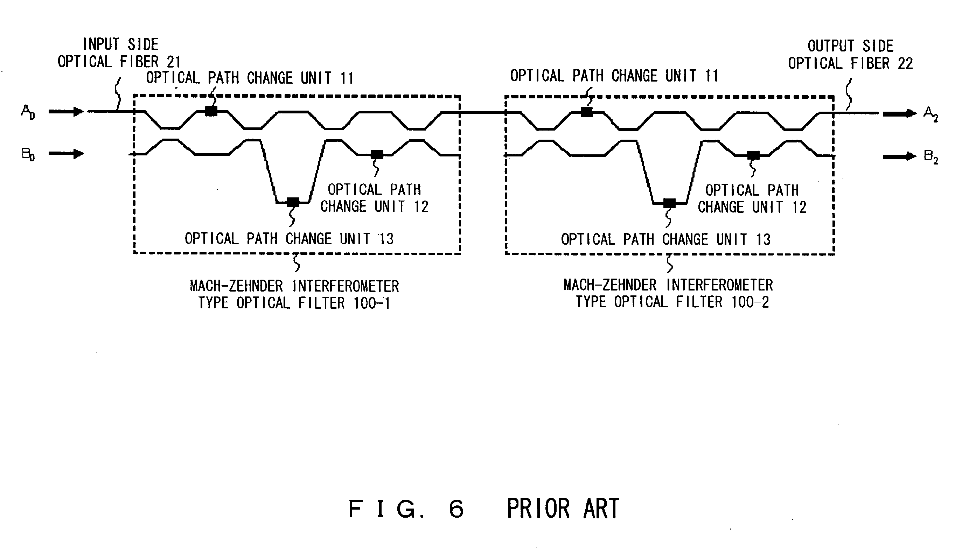

FIG. 6 shows an example of the configuration of an optical gain equalizer having two stages of optical filters as an example of the simplest optical gain equalizer. When the filter average insertion loss of the optical filter changes, the average insertion loss of the optical gain equalizer having a plurality of optical filters connected as shown in FIG. 6 also changes. This phenomenon becomes a serious problem when the optical gain equalizer is inserted into the optical transmission system because an optical gain equalizer is normally inserted into the system as enclosed by optical amplifiers, and the optical amplifiers operate under constant average output power (hereinafter referred to as APC (auto power control)). Therefore, when the average insertion loss of the optical gain equalizer fluctuates, the average output power of the optical gain equalizer also fluctuates. As a result, the operation condition of the optical amplifier arranged at the subsequent stage changes. There is also the problem that the entire system is very difficult.

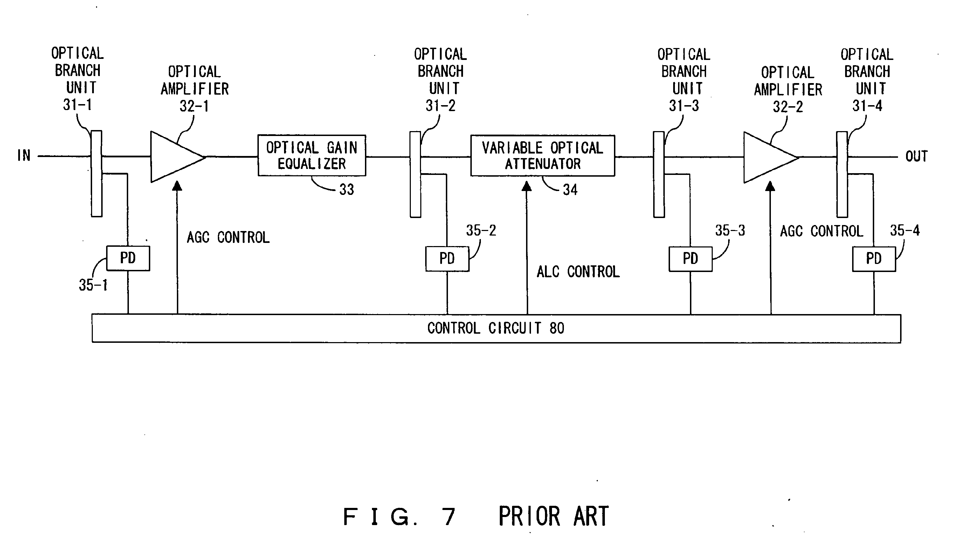

FIG. 7 shows an example of the configuration of an optical amplifier. With the optical amplifiers shown in FIG. 7, the first optical amplifier 32-1 and the second optical amplifier 32-2 are connected in series to increase the optical output, and a fixed optical gain equalizer 51 and a variable optical attenuator (VOA) 61 are arranged between them. The first optical amplifier 32-1 arranged at the input side is a low noise unit, and the second optical amplifier 32-2 arranged at the output side is a high output power unit. Additionally, the optical branch units 31-1, 31-2, 31-3, and 31-4 are arranged at the input side of the first optical amplifier 32-1, between the optical gain equalizer 51 and the variable optical attenuator 61, at the input side of the second optical amplifier 32-2, and the output side of the second optical amplifier 32-2 respectively. The photodiodes (PD) 35-1, 35-2, 35-3, and 35-4 are arranged at the respective branch targets.

When the input power into the first optical amplifier 32-1 and the second optical amplifier 32-2 fluctuates, the automatic gain control is performed on the first optical amplifier 32-1 and the second optical amplifier 32-2 using the PD 35-1 and 35-2, and the PD 35-3 and 35-4 respectively. The variable optical attenuator 61 is controlled using the PD 35-2 such that the input power (and the output power) of the second optical amplifier 32-2 can be constant although the input power of the first optical amplifier 32-1 fluctuates (automatic level control (ALC)), thereby guaranteeing an input dynamic range. The above-mentioned control is collectively performed by a control circuit 80. Thus, there has been a problem with the optical amplifier, using an optical gain equalizer formed by an optical filter, in that the VOA 61 is required to maintain the input power to the second optical amplifier 32-2.

**Summary of the Invention**

The present invention has been developed to solve the above-mentioned problems, and first aims at providing a Mach-Zehnder interferometer type optical filter and its control method in which a filter extinction ratio and a filter average insertion loss can be independently controlled. The second object of the present invention is to provide an optical gain equalizer and its control method in which the transmitting characteristics of a filter can be controlled with the average insertion loss maintained at a predetermined value. The third object of the present invention is to provide an optical amplifier in a simpler structure.

To solve the above-mentioned problems, according to the first aspect of the present invention, an optical filter includes first, second, and third Mach-Zehnder interferometers, first and second optical path change units for changing the optical path of the first and second Mach-Zehnder interferometers, and a control unit for controlling the filter extinction ratio of the optical filter using the first optical path change unit and the second optical path change unit. In the optical filter, the control unit sets the amount of a change in the optical path of the first optical path change unit and the amount of a change in the optical path of the second optical path change unit such that the filter average insertion loss of the optical filter, the filter extinction ratio, and the amounts of changes in optical path of the first and second optical path change units can satisfy a predetermined relationship.

With the above-mentioned configuration, the control unit sets the amount of a change in the optical path of the first optical path change unit and the amount of a change in the optical path of the second optical path change unit based on the above-mentioned predetermined relationship. Thus, while maintaining the transmittance characteristics like a sine wave of the optical filter, different amounts of changes in optical path can be assigned to two optical path change units for controlling the filter extinction ratio, thereby solving the problem in which the filter average insertion loss fluctuates when the filter extinction ratio is controlled.

The first equation indicating the predetermined relationship can also be obtained by simultaneously solving the third equation indicating the relationship between the filter average insertion loss obtained by the second equation indicating the output intensity of the signal light at the waveguide terminal and the amount of a change in optical path by the first and second optical path change units and the fourth equation indicating the relationship between the filter extinction ratio obtained by the second equation and the amount of a change in the optical path by the first and second optical path change units.

Furthermore, with the above-mentioned configuration, the control device can also set the amount of a change in the optical path by the first and second optical path change units such that the filter extinction ratio can be changed with the filter average insertion loss of the optical filter maintained at a predetermined value based on the first equation. Additionally, the control device can set the amount of a change in the optical path by the first and second optical path change units such that the filter average insertion loss can be changed with the filter extinction ratio of the optical filter maintained at a predetermined value based on the first equation. The control device can also independently control the filter extinction ratio of the optical filter and the filter average insertion loss by setting the amount of a change in the optical path by the first and second optical path change units based on the first equation.

With the above-mentioned configuration, the first and second optical path change units can change the optical path using a thermo-optical effect, and can change the optical path using an electro-optical effect.

According to another aspect of the present invention, an optical gain equalizer can be configured by connecting a plurality of optical filters having the above-mentioned configuration. As described above, since the filter average insertion loss and the filter extinction ratio of each optical filter forming the optical gain equalizer can be independently controlled, the transmittance wavelength characteristics and the average insertion loss of the optical gain equalizer can be independently controlled. Therefore, for example, an optical gain equalizer capable of controlling the transmittance characteristics can be configured with the average insertion loss maintained at a predetermined value. Therefore, the problem with the conventional technology that when the transmittance characteristics of the optical gain equalizer is changed, the average insertion loss also fluctuates, thereby fluctuating the average output power of the optical gain equalizer, and the operation condition of the optical amplifier arranged at the subsequent stage is changed can be successfully solved.

According to a further aspect of the present invention, the optical gain equalizer with the above-mentioned configuration can be arranged in the middle of relay spans of the optical transmission system and can be configured to compensate for the tilt of the optical amplifier. Thus, the ONSR of the signal light can be improved, thereby extending the transmission distance.

Furthermore, an optical amplifier can be configured using the optical gain equalizer having the above-mentioned configuration. According to a further aspect of the present invention, an optical gain equalizer includes a first optical amplification unit, a second optical amplification unit arranged at the stage subsequent to the first optical amplification unit, and an optical signal monitor unit for monitoring the output power level of the signal light output from the second optical amplification unit. Then, based on the monitor result at the output power level, the average insertion loss of the optical gain equalizer is controlled to even the signal light power level using the optical path change unit in each optical filter forming the optical gain equalizer. Thus, since the optical gain equalizer according to the first aspect of the present invention can independently control the transmittance wavelength characteristics and the average insertion loss, the optical gain equalizer can be used in evening the signal light power level, thereby requiring no VOA which has been required for an optical amplifier in the conventional technology.

The optical gain equalizer can also be arranged between the first and second optical path change units, and before the first optical path change unit. The optical gain equalizer can also be arranged between the second optical path change unit and the optical signal monitor unit.

The optical amplifier can further include an optical branch unit for performing automatic gain control on each optical amplification unit, and a photodiode.

When the optical amplifier is controlled to follow the fluctuation. of the signal light power by feeding back the signal light power output from the optical amplifier to the optical amplifier, the tilt of the output of the first and second optical path change units can be dynamically compensated for, thereby possibly performing the automatic output control. When the automatic gain control is performed, it is necessary to respectively provide an optical branch unit and a photodiode at the stages preceding and subsequent to each optical amplification unit. However, when automatic output control is performed, it is not necessary to provide an optical branch unit and a photodiode at the stage preceding the optical amplification unit, thereby further simplifying the configuration of the optical amplifier.

Furthermore, the optical amplifier having the above-mentioned configuration can be provided in the middle of relay spans of the optical transmission system. In the optical transmission system, the signal light power output from the optical amplifier with the above-mentioned configuration is controlled to be constant. Therefore, the deviation of the signal light power accumulated by connecting a plurality of optical amplifiers in series is reduced, and the transmission distance is extended.

Additionally, the control method for an optical filter, an optical gain equalizer, or an optical amplifier including the procedures similar to the operations performed by the optical gain equalizer or the optical amplifier can also solve the above-mentioned problems.

**Brief Description of the Drawings**

FIG. 1 is an example (1) of a filter spectrum of an optical filter according to the conventional technology;
FIG. 2 is an example (2) of a filter spectrum of an optical filter according to the conventional technology;
FIG. 3 is an example (3) of a filter spectrum of an optical filter according to the conventional technology;
FIG. 4 is an example (4) of a filter spectrum of an optical filter according to the conventional technology;
FIG. 5 is an example (5) of a filter spectrum of an optical filter according to the conventional technology;
FIG. 6 shows an example of the configuration of an optical gain equalizer;
FIG. 7 shows an example of the configuration of an optical amplifier according to the conventional technology;
FIG. 8 shows the configuration indicating the principle of a Mach-Zehnder interferometer type optical filter;
FIG. 9 shows an example (1) of the configuration of an optical filter according to the first embodiment of the present invention;
FIGS. 10A through 10D show an example (2) of the configuration of an optical filter according to the first embodiment of the present invention;
FIG. 11 shows an example (1) of a filter spectrum of an optical filter according to the first embodiment of the present invention;
FIG. 12 shows an example (2) of a filter spectrum of an optical filter according to the first embodiment of the present invention;
FIG. 13 shows an example (3) of a filter spectrum of an optical filter according to the first embodiment of the present invention;
FIG. 14 shows an example (4) of a filter spectrum of an optical filter according to the first embodiment of the present invention;
FIG. 15 shows an example (5) of a filter spectrum of an optical filter according to the first embodiment of the present invention;
FIG. 16 shows an example (6) of a filter spectrum of an optical filter according to the first embodiment of the present invention;
FIG. 17 shows an example (7) of a filter spectrum of an optical filter according to the first embodiment of the present invention;
FIG. 18 shows an example (8) of a filter spectrum of an optical filter according to the first embodiment of the present invention;
FIG. 19 shows an example (9) of a filter spectrum of an optical filter according to the first embodiment of the present invention;
FIG. 20 shows an example (10) of a filter spectrum of an optical filter according to the first embodiment of the present invention;
FIG. 21 shows an example of the configuration of the optical gain equalizer according to the second embodiment of the present invention;
FIG. 22 shows an example (1) of the configuration of an optical amplifier according to the third embodiment of the present invention;
FIG. 23 shows an example (2) of the configuration of an optical amplifier according to the third embodiment of the present invention;
FIG. 24 shows an example (3) of the configuration of an optical amplifier according to the third embodiment of the present invention;
FIG. 25 shows an example (4) of the configuration of an optical amplifier according to the third embodiment of the present invention;
FIG. 26 shows an example (1) of the configuration of the optical transmission system according to the fourth embodiment of the present invention; and
FIG. 27 shows an example (2) of the configuration of the optical transmission system according to the fourth embodiment of the present invention.

**EP 1 441 455 A2**

## Description of the Preferred Embodiments

The embodiments of the present invention are described below by referring to the attached drawings. The same reference numerals are assigned to the same device, etc., and the corresponding explanation is omitted hereinafter.

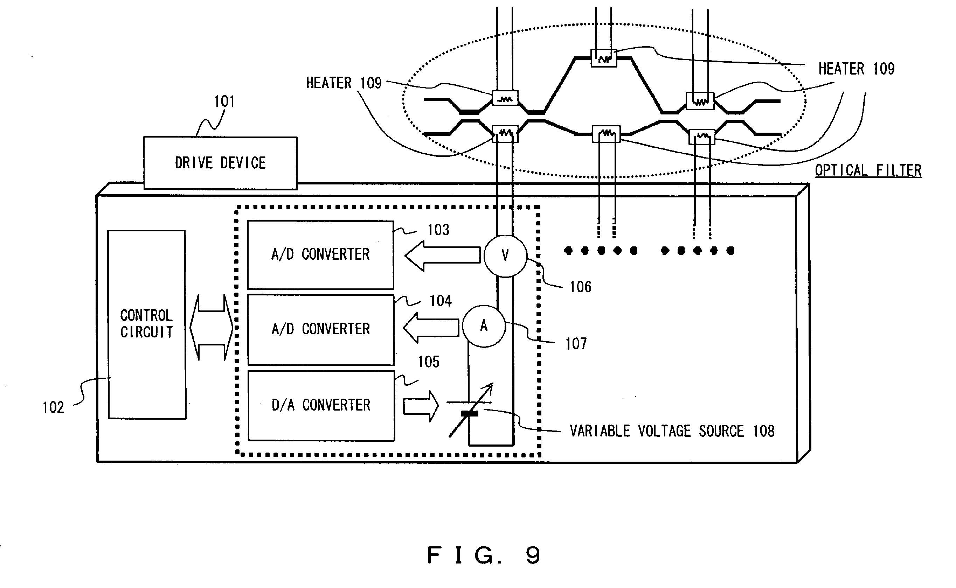

FIG. 8 shows the configuration of a Mach-Zehnder interferometer type optical filter. FIG. 8 is explained when the conventional technology is described above, and the same explanation is omitted here. Described below is the configuration of the optical filter according to the first embodiment of the present invention. The optical filter according to the first embodiment comprises a Mach-Zehnder interferometer type optical filter 100 as shown in FIG. 8 and its drive device. The optical filter can use the thermo-optical effect of a planar lightware circuit, the electro-optical effect of a strong dielectric crystal and a semiconductor material, etc. The optical filter according to the present embodiment can use any of these types. The configuration of the drive device of an optical filter using the thermo-optical effect is described below by referring to FIG. 9. The filter of this type uses a quartz material for the optical path change units 11, 12, and 13. As shown in FIG. 9, a thin film resistor heater 109 is arranged for the optical path change units 11, 12, and 13 provided for the arm portion of each Mach-Zehnder interferometer.

A drive device 101 of the Mach-Zehnder interferometer type optical filter 100 comprises an ammeter 106 for measuring power supply to each heater 109, a volt meter 107, a variable voltage source 108 for varying supplied voltage, A/D (analog to digital) converters 103 and 104 for converting an analog measurement value of the ammeter 106 and the volt meter 107 into digital form, and outputting the result to a control circuit 102, and a D/A (digital to analog) converter 105 for converting a digital control signal output from the control circuit 102 into an analog value and outputting the result to the variable voltage source 108.

The control circuit 102 changes the refractive index of the material forming the optical path change units 11, 12, and 13 by changing the power supplied to each heater 109 by the variable voltage source 106, thereby controlling the amount of a change in the optical path. As described later, the control circuit 102 controls the filter extinction ratio and the filter average insertion loss of an optical filter independently by individually setting the amount of a change in the optical path to be assigned to the optical path change unit 11 and the optical path change unit 12 based on the equation (equation (7) described later) indicating the relationship among the filter extinction ratio, the filter average insertion loss, and the amount of a change in the optical path assigned to the two optical path change units 11 and 12 to control the extinction ratio. "Individually setting" refers to "not equally setting the amount of a change in the optical path to be assigned to the optical path change unit 11 and the optical path change unit 13.

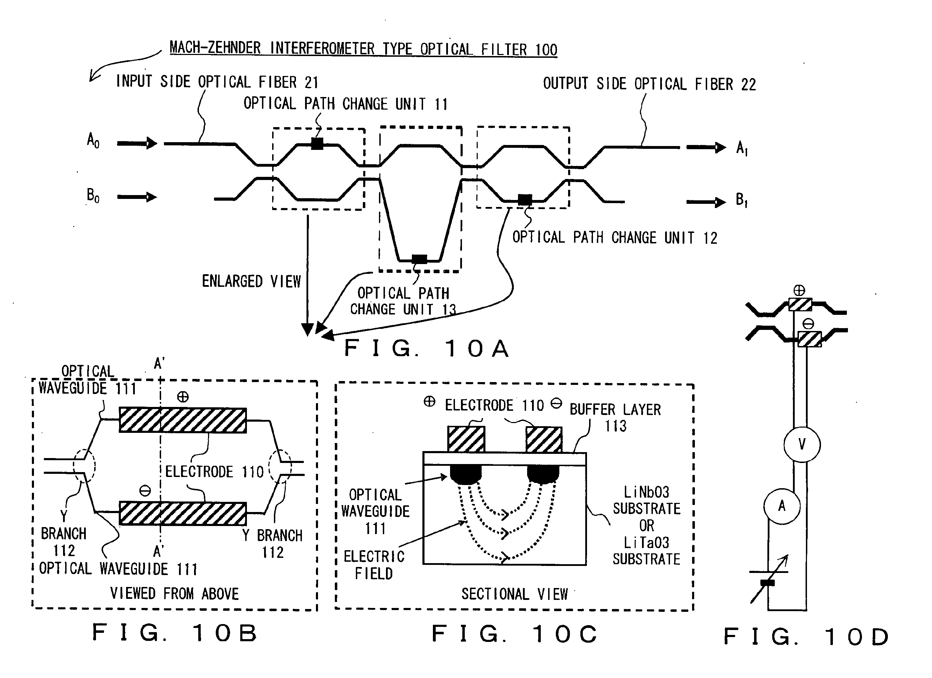

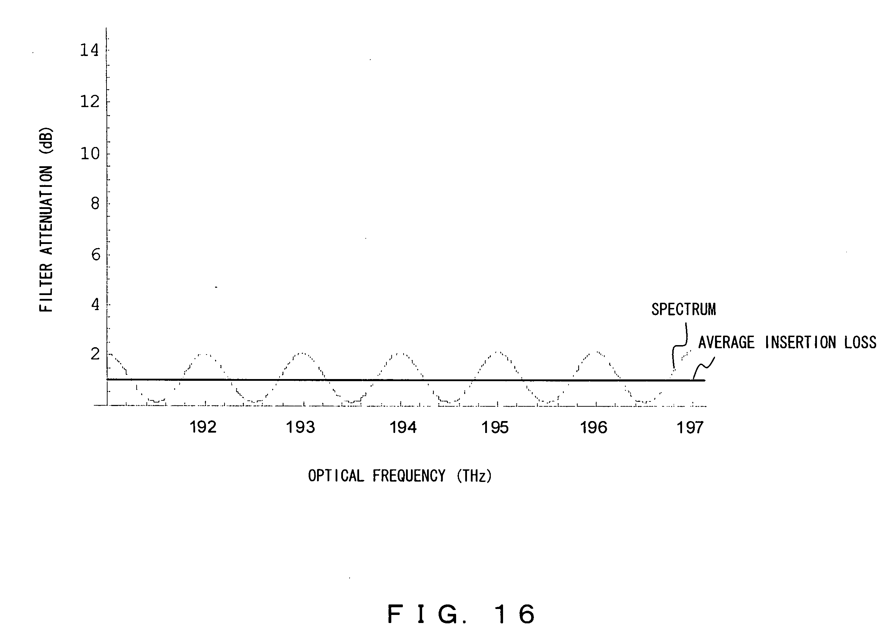

The method of driving the Mach-Zehnder interferometer type optical filter of the type using the electro-optical effect is described below by referring to FIG. 16A through 16D. The drive device in this case is similar to the drive device shown in FIG. 9. Therefore, in FIG. 10A through 10D, the configuration of the drive device is omitted. However, in this case, as shown in FIG. 10D, the voltage from the drive device is applied between the electrodes. As FIG. 10A is the same as FIG. 8, the explanation is omitted here.

In this type, a strong dielectric crystal material such as $LiNbO_3$, $LiTaO_3$, etc. is applied as a substrate to the optical path change units 11, 12, and 13. FIG. 10B is an enlarged view of the optical path change unit 11, 12, or 13. As shown in FIG. 10B, the optical path change unit 11, 12, or 13 has two waveguides, two bidirectional couplers 112, and a pair of electrodes 110 on the substrate. FIG. 10C is a sectional view of the pair of electrodes 110 on the alternate long and short dashed lines AA' shown in FIG. 10B. As shown in FIG. 10C, a pair of electrodes 110 are applied to the substrate through a buffer layer 113. In the substrate, an optical waveguide 111 is generated, and the electrode 110 is arranged on the optical waveguide 111. Between the electrode 110, a voltage is applied from the drive device 101 of the Mach-Zehnder interferometer type optical filter 100, and the voltage is changed by a variable voltage source.

The drive device 101 controls the intensity of an electric field generated between electrodes by changing the voltage provided between the electrodes 110. Thus, the refractive index of the material forming the optical path change units 11, 12, and 13 is changed, thereby controlling the amount of a change in the optical path.

The method of controlling the Mach-Zehnder interferometer type optical filter using the control circuit 102 is described below using a theoretical calculation by referring to FIG. 8. In the explanation below, as in the description about the conventional technology, the amounts of changes in the optical path to be added to the optical path change units 11, 12, and 13 are assumed to be $\Delta L_1$, $\Delta L_2$, and $\Delta L_3$ respectively. $A_0$ indicates an optical input terminal, and $A_1$ indicates an optical output terminal.

When the equation (1) can be varied into the following equation (3).

$$P_{a1} = \frac{1}{4}(2 + \cos\{\frac{2\pi(\Delta L_1 - \Delta L_2)\nu}{c}\} + \cos\{\frac{2\pi(\Delta L_1 + \Delta L_2)\nu}{c}\}$$

7

$$+ \frac{1}{4}\cos\frac{2\pi(c + \Delta L_3 \Delta v)v}{c\Delta v}\{\cos\frac{2\pi(\Delta L_1 + \Delta L_2)v}{c} - \cos\frac{2\pi(\Delta L_1 - \Delta L_2)v}{c}\} \tag{3}$$

The equation (3) above includes three periodic function components of cos {$2\pi$ ($\Delta L_1$ - $\Delta L_2$) v/c}, cos {$2\pi$ ($\Delta L_1$ + $\Delta L_2$) v/c}, and cos {$2\pi$ (c + $\Delta L_3 \Delta v$) v/ (c$\Delta v$)}. It is obvious from the equation (3) that the integral value on the frequency axis in the lower line of the equation (3) is 0 (zero). Therefore, only the upper line of the equation (3) expresses the average output power.

As a result, assuming that the filter average insertion loss is A (dB) > 0, the relational expression of A, $\Delta$L1, and $\Delta$L2 is expressed by the following equation (4).

$$A = -10\log_{10}[\frac{1}{4}\{2 + \cos\frac{2\pi(\Delta L_1 - \Delta L_2)v}{c} + \cos\frac{2\pi(\Delta L_1 + \Delta L_2)v}{c}\}] \tag{4}$$

where A > 0.

Then, the equation (1) above can be varied into another form expressed by the following equation (5).

$$P_a(z) = \frac{1}{4}\{2 + \cos\frac{2\pi(\Delta L_1 - \Delta L_2)v}{c}(1 - \cos\{\frac{2\pi(c + \Delta L_3 \Delta v)v}{c\Delta v}\})\}$$

$$+ \frac{1}{4}\{2 + \cos\frac{2\pi(\Delta L_1 + \Delta L_2)v}{c}(1 + \cos\frac{2\pi(c + \Delta L_3 \Delta v)v}{c\Delta v})\} - \frac{1}{2} \tag{5}$$

1 - cos {$2\pi$ (c + $\Delta$L3 $\Delta$v) v/(c$\Delta$v)} and 1 + cos $\pi$ (c + $\Delta$L3 $\Delta$v) v/(c$\Delta$v)} indicate small and fine filter components of the FSR, and the product of cos {$2\pi$ ($\Delta L_1$ - $\Delta L_2$) v/c} and cos {$2\pi$ ($\Delta L_1$ + $\Delta L_2$) v/c} can be the entire filter spectrum.

As a result, when filter extinction ratio is B (dB) > 0, the relational expression of B, $\Delta$L1, and $\Delta$L2 is expressed by the following equation (6).

$$B = -10\log_{10}[\frac{1}{2}\{1 + \cos\frac{2\pi(\Delta L_1 - \Delta L_2)v}{c}\}] - 10\log_{10}[\frac{1}{2}\{1 + \cos\frac{2\pi(\Delta L_1 + \Delta L_2)v}{c}\}]$$

$$= 10\{\log_{10}(1 + \cos\frac{2\pi(\Delta L_1 - \Delta L_2)v}{c} - \log_{10}(1 + \cos\frac{2\pi(\Delta L_1 + \Delta L_2)v}{c})\}$$

$$\cdots (6)$$

where B > 0.

Furthermore, the following equation (7) is obtained by simultaneously solving the equations (4) and (6).

$$\cos\frac{2\pi(\Delta L_1 - \Delta L_2)v}{c} = -\frac{1 - 2^{2-\frac{A}{10}+\frac{B}{10}} * 5^{-\frac{A}{10}+\frac{B}{10}} + 10^{\frac{B}{10}}}{1 + 10^{\frac{R}{10}}}$$

$$\cos\frac{2\pi(\Delta L_1 - \Delta L_2)v}{c} = -\frac{1 - 2^{2-\frac{A}{10}} * 5^{\frac{A}{10}} + 10^{\frac{B}{10}}}{1 + 10^{\frac{B}{10}}} \tag{7}$$

In the equation (7) above, c / {2 ($\Delta L_1$ + $\Delta L_2$)} is to be equal to or larger than 200 x 10$^{-12}$.

Described below are the variations of the filter spectrum and the filter average insertion loss when a filter is controlled based on the equation (7). First, the filter spectrum obtained when the filter extinction ratio is changed with the filter average insertion loss maintained at a predetermined value.

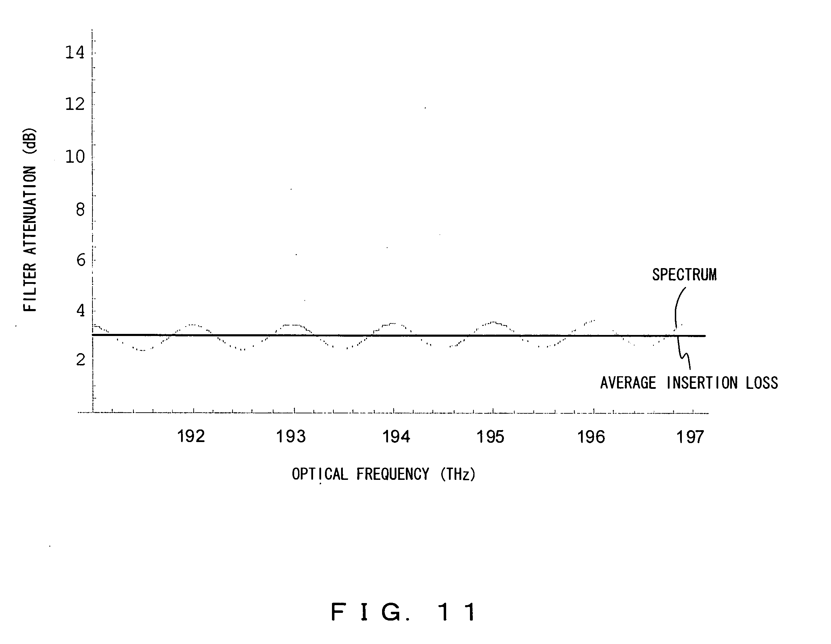

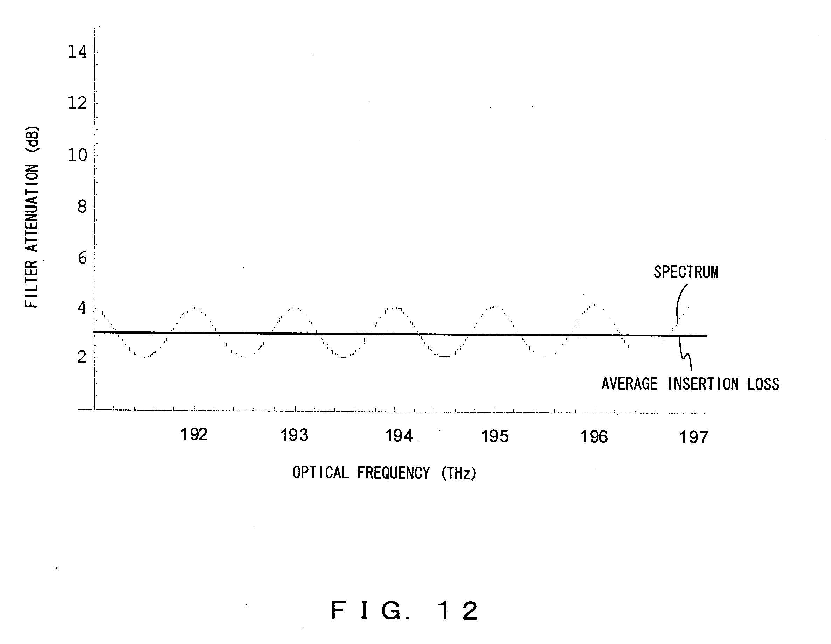

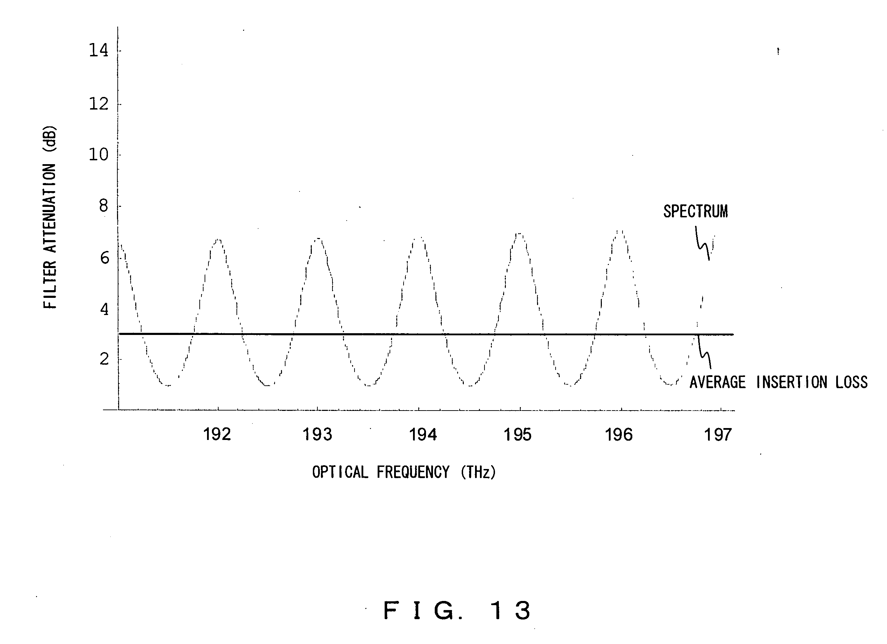

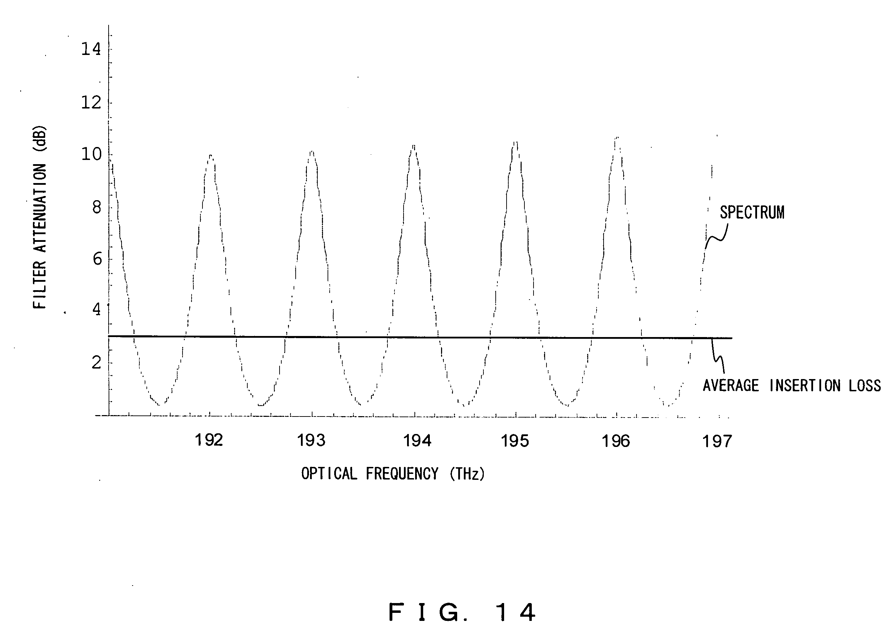

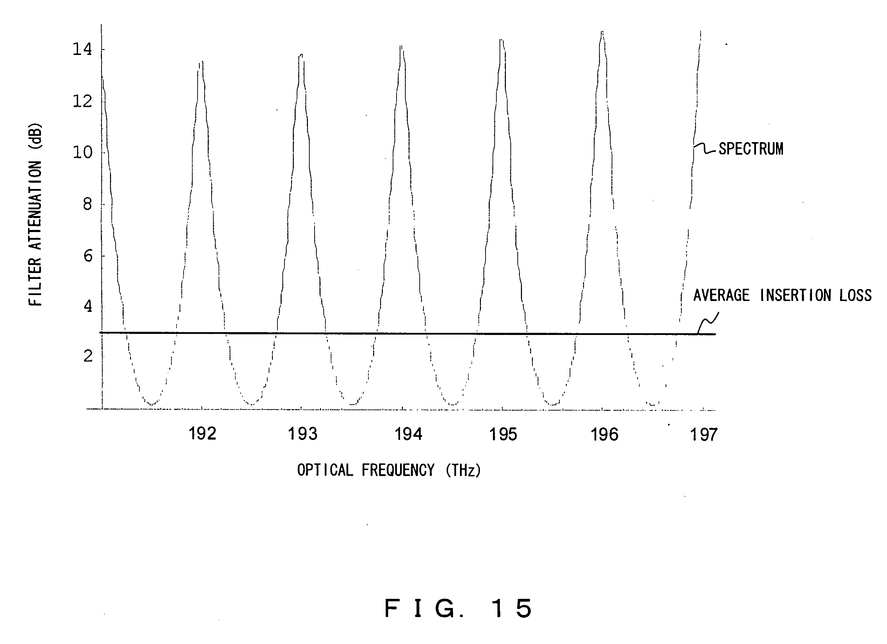

FIGS. 11 through 15 show the variation of the filter spectrum when the filter extinction ratio is changed from 1 through 14dB (1, 2, 6, 10, and 14dB) with the filter average insertion loss maintained at the predetermined value of 3dB. In FIGS. 11 through 15, $\Delta L_1$ and $\Delta L_2$ are obtained based on the equation (7) such that a desired filter average insertion loss and filter extinction ratio can be obtained at $\nu = 194$ THz which is the center of C (conventional) band. As shown in FIGS. 11 through 15, the amplitude of a spectrum grows as the filter extinction ratio increases, but the average insertion loss remains constant. Therefore, in the method of controlling of the present embodiment, the control circuit 102 can control the Mach-Zehnder interferometer type optical filter such that the filter extinction ratio can be changed with the filter average insertion loss maintained at a constant level by setting the values of $\Delta L_1$ and $\Delta L_2$ based on the equation (7).

Described below is the filter spectrum obtained when the filter average insertion loss A is changed with the filter extinction ratio B maintained at a predetermined value based on the equation (7).

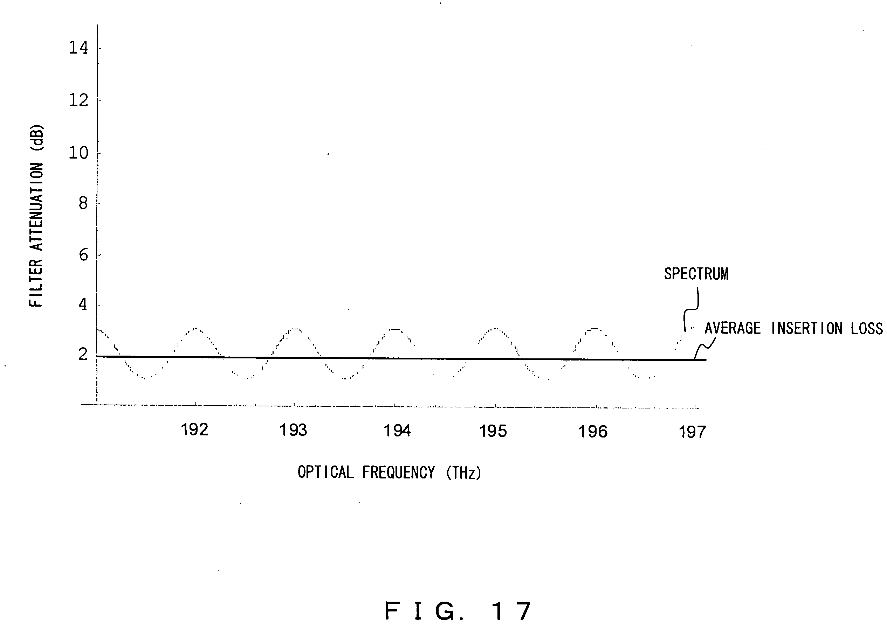

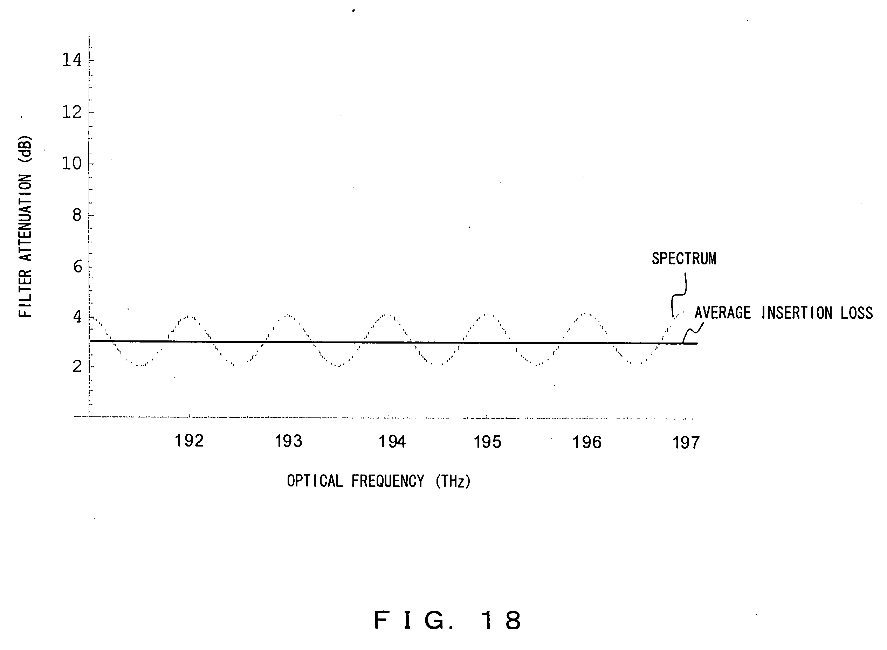

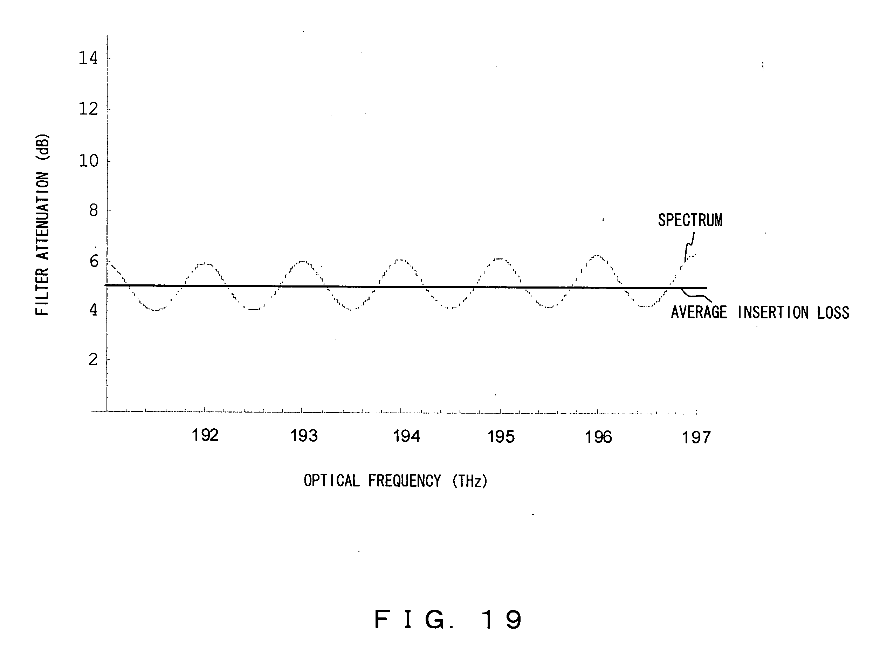

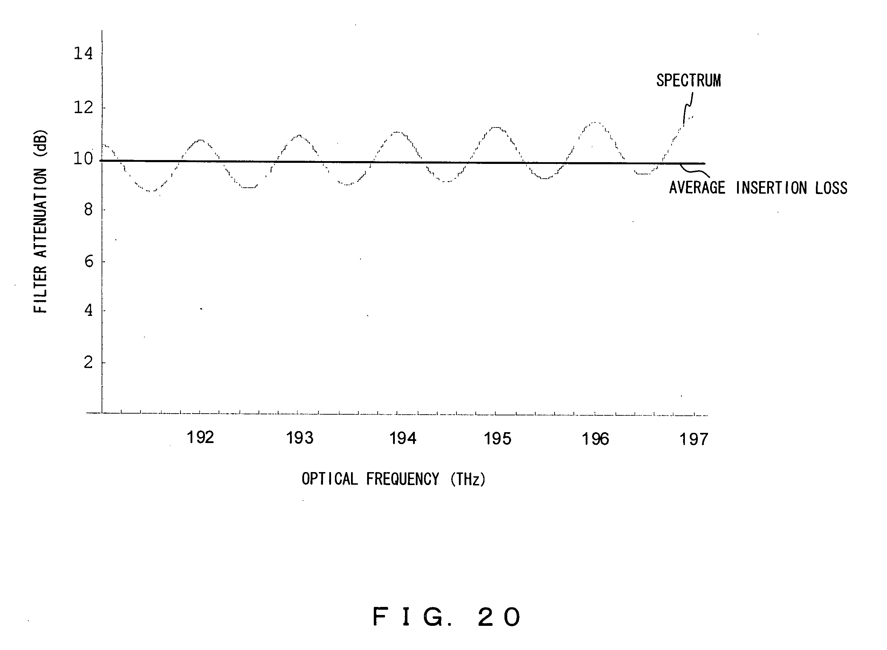

FIGS. 16 through 20 show the variation of a filter spectrum when the filter extinction ratio is changed gradually from 1 through 10 dB (1, 2, 3, 5, and 10 dB) with the filter extinction ratio B maintained at a predetermined value of 2 dB. As in the case shown in FIGS. 11 through 15, $\Delta L_1$ and $\Delta L_2$ are obtained based on the equation (7) such that a desired filter average insertion loss and filter extinction ratio can be obtained at $\nu = 194$ THz in FIGS. 16 through 20. It is assumed that the optical frequency range is 191 through 197 THz, and $\Delta \nu = 1$ THz. As shown in FIGS. 16 through 20, the amplitude of the spectrum is not changed although the average insertion loss is changed. Therefore, according to the control method of the present embodiment, the control circuit 102 can control the Mach-Zehnder interferometer type optical filter such that the filter extinction ratio can be maintained at a constant level although the filter average insertion loss is changed by individually setting the values of $\Delta L_1$ and $\Delta L_2$ based on the equation (7).

Therefore, according to FIGS. 11 through 15, the control circuit 102 can independently control the filter average insertion loss and the filter extinction ratio of the Mach-Zehnder interferometer type optical filter. However, it is necessary to set in advance the frequency $\nu$ (Hz) for desired filter average insertion loss and filter extinction ratio.

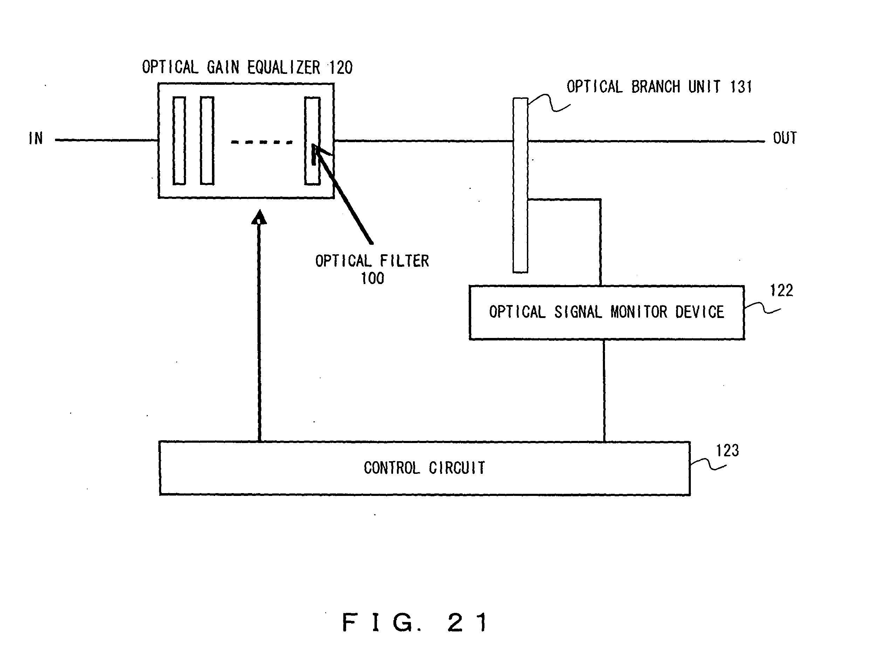

Furthermore, by connecting a plurality of Mach-Zehnder interferometer type optical filters using the control method according to the present invention in series, an optical gain equalizer capable of controlling the transmittance characteristics with the average insertion loss maintained at a predetermined value can be configured. Described below is an optical gain equalizer using the above-mentioned optical filter as the second embodiment of the present invention. FIG. 21 shows an example of the configuration of the optical gain equalizer according to the second embodiment.

As shown in FIG. 21, an optical gain equalizer 120 according to the second embodiment is formed by a plurality of optical filters having different FSRs. Each Mach-Zehnder interferometer type optical filter 100 has already been described by referring to the first embodiment of the present invention. An optical signal monitor device 121 is provided at the stage subsequent to the optical gain equalizer 120 to monitor the signal light power level output from the optical gain equalizer 120. A control circuit 123 controls each optical filter forming part of the optical gain equalizer 120 so that the power level of the signal light output from the optical gain equalizer 120 can be evened.

To be more practical, the control circuit 123 determines the transmittance wavelength characteristics generated by a plurality of optical filters forming the optical gain equalizer 120 based on a monitor result, and computes the extinction ratio and phase of each optical filter by developing the transmittance wavelength characteristics using the method of the Fourier theorem. Furthermore, the control circuit 123 determines the amounts of changes in the optical path of the optical path change units of a plurality of Mach-Zehnder interferometers configuring each optical filter. Then, the control circuit 123 controls the power or voltage supplied to the heater, electrode, etc. provided for each optical path change unit using a variable voltage source (not shown in the attached drawings) so that the determined amount of a change in optical path can be obtained. At this time, as in the case according to the first embodiment, the filter average insertion loss and filter extinction ratio of each optical filter can be independently controlled. Therefore, the control circuit 123 can independently control the transmittance wavelength characteristics and the average insertion loss of the optical gain equalizer 120.

Thus, the problem that when the transmittance characteristics of the optical gain equalizer is changed, the average insertion loss simultaneously changes, and the operation condition of the optical amplifier arranged at the stage subsequent to the optical gain equalizer can be successfully solved.

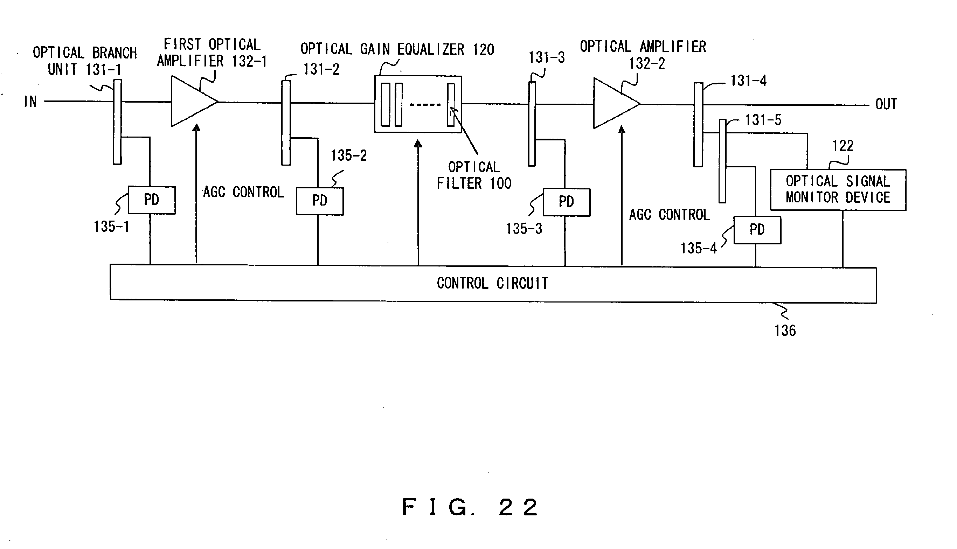

An optical amplifier can also be configured using the optical gain equalizer according to the second embodiment of the present invention. As the third embodiment of the present invention, the optical amplifier using the above-mentioned optical gain equalizer is described below. FIG. 22 shows an example of the configuration of an optical amplifier according to the third embodiment.

As shown in FIG. 22, the optical amplifier according to the third embodiment is configured by connecting two stages of a first optical amplifier 132-1 and a second optical amplifier 132-2 in series between which the optical gain equalizer 120 according to the second embodiment is arranged. An optical branch unit 131-1 and a PD 135-1 are arranged at the stage preceding the first optical amplifier 132-1, and an optical branch unit 131-2 and a PD 135-2 are arranged at the subsequent stage. Similarly, an optical branch unit (131-1, 132-4) and a PD (135-3, 132-4) are provided before and after the second optical amplifier 132-2. An optical branch unit 131-5 and an optical signal monitor device 122 for monitoring the power level of the signal light output from the second optical amplifier 132-2 are provided at the stage subsequent to the second optical amplifier 132-2. The configuration of the optical gain equalizer 120 has already been described above by referring to the second embodiment of the present invention.

According to the third embodiment of the present invention, as described above by referring to the second embodiment, the control circuit 123 can independently control the transmittance wavelength characteristics and the average insertion loss of the optical gain equalizer 120. The control circuit 123 performs the AGC using the PD 135-1 and 135-2, and the PD 135-3 and 135-4 such that the tilt cannot largely fluctuate when the input power to the first optical amplifier 132-1 and the second optical amplifier 132-2 fluctuates.

The power level of the signal light output from the second optical amplifier 132-2 is monitored by the optical signal monitor device 122. In addition to the control of the PDs 135-1 through 135-4, the control circuit 123 controls the average insertion loss of the optical gain equalizer 120 based on the monitor result such that the power level of the signal light input to the second optical amplifier 132-2 can be constant so as to even the power level of the signal light output from the amplifier.

Thus, using the optical amplifier according to the third embodiment, the amplified power of the signal light is fed back to the optical gain equalizer 120 in the optical amplifier. As a result, the control circuit 123 can control the optical amplifier such that the fluctuation with time, etc. of the signal light power can be followed.

Therefore, using the optical amplifier according to the third embodiment, the power level of the signal light output from the optical amplifier can be evened through the optical gain equalizer 120. As a result, a VOA 34, which is provided in the optical amplifier shown in FIG. 7 at the stage subsequent to the optical gain equalizer 120 such that the input power of the second optical amplifier 32-2 can be kept constant although the input power of the first optical amplifier 32-1 fluctuates, is no more required in the optical amplifier according to the third embodiment shown in FIG. 22.

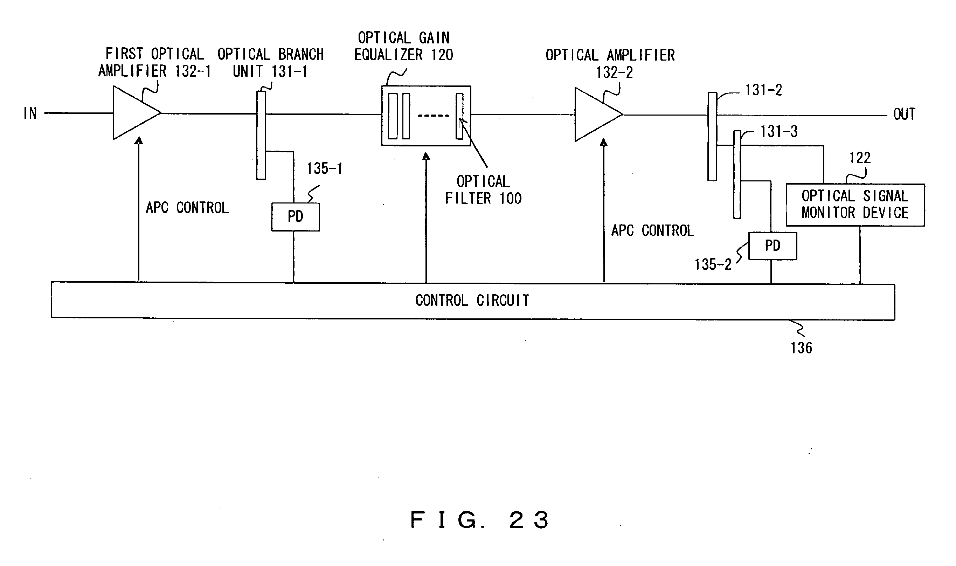

An example of the configuration of another optical amplifier is described below as a variation according to the third embodiment. FIG. 23 shows an example of the configuration of the optical amplifier according to a variation of the third embodiment. As with the optical amplifier shown in FIG. 22, the optical amplifier shown in FIG. 23 is configured by connecting two stages of the first optical amplifier 132-1 and the second optical amplifier 132-2 in series between which the optical gain equalizer 120 is provided. The configuration of the optical gain equalizer 120 has already been described above by referring to the second embodiment of the present invention.

As described above, according to the third embodiment, the power of the signal light amplified by the optical amplifier is fed back to the optical amplifier. As a result, the control circuit 123 can control the optical amplifier such that the fluctuation of the signal light power can be followed. When the feedback control is performed, it is not necessary to perform the AGC because the tilt of the first optical amplifiers 132-1 and 132-2 can be dynamically compensated for, thereby causing no problem when the APC (automatic power control) is performed. Thus, using the optical amplifier according to a variation of the third embodiment, the APC is performed on the first optical amplifiers 132-1 and 132-2 to remove the necessity of the PD and the optical branch unit arranged respectively at the stage preceding the first optical amplifier 132-1 and at the stage preceding the second optical amplifier 132-2.

Thus, according to the variation, the VOA and two PDs and two optical branch units can be omitted, thereby realizing an optical amplifier having a simpler configuration.

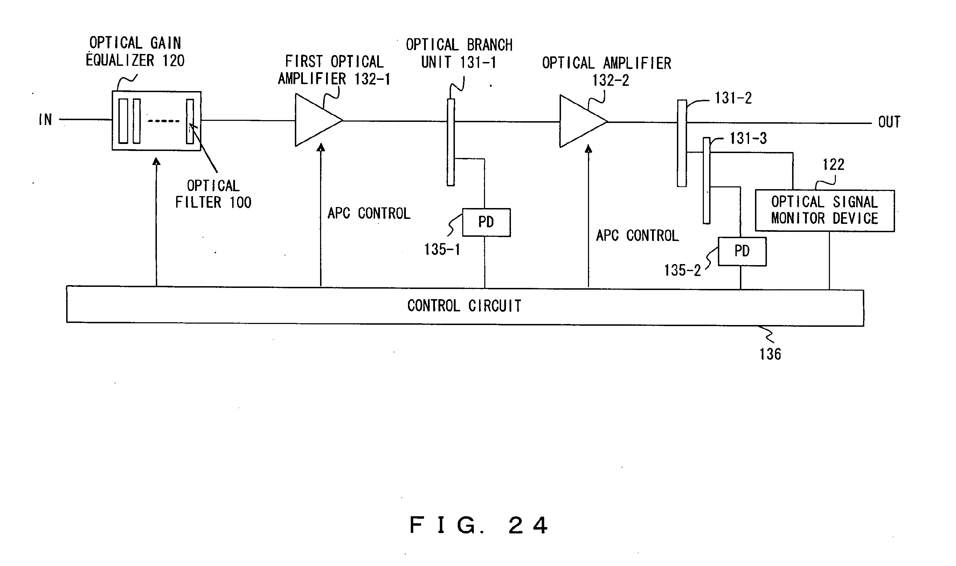

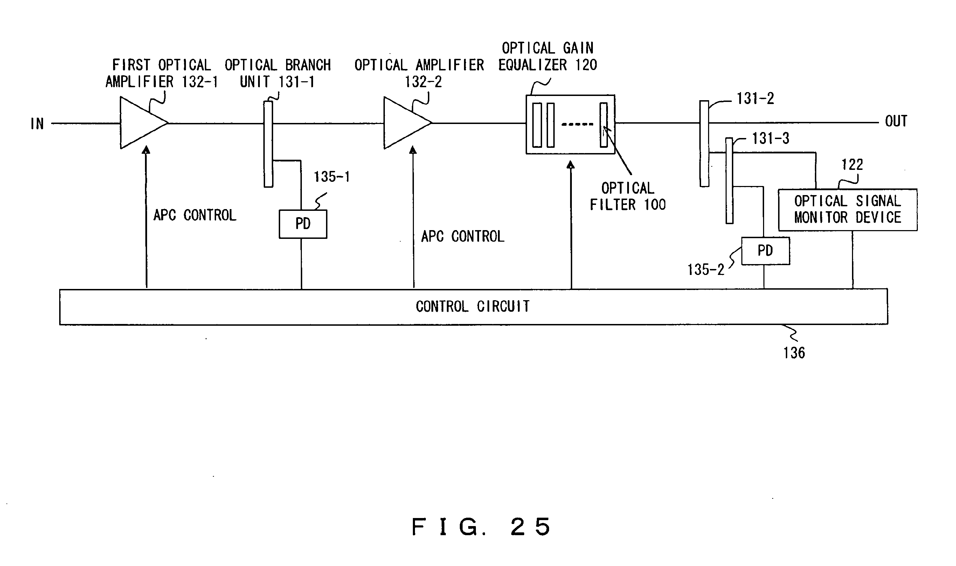

An example of the configuration of another optical amplifier is described below as an example of a further variation of the third embodiment. From the viewpoint of level diagram, etc., it is desired that the insertion position of the optical gain equalizer is anywhere between two optical amplifiers, but the two optical amplifiers can be mounted at either preceding or subsequent stages. FIGS. 24 and 25 show an example of the configuration of the optical amplifier according to an example of a further variation of the third embodiment of the present invention. Using the optical amplifier shown in FIG. 24, two stages of the first optical amplifier 132-1 and the second optical amplifier 132-2 are connected in series. The optical gain equalizer 120 is mounted at the stage preceding the first optical amplifier 132-1, not between the two optical amplifiers. Using the optical amplifier shown in FIG. 25, the optical gain equalizer 120 is mounted at the stage subsequent to the two stages of the first optical amplifier 132-1 and 132-2 connected in series. The configuration of the optical gain equalizer 120 has already been described according to the second embodiment.

However, as shown in FIG. 24, when the optical gain equalizer 120 is inserted into the stage preceding the first optical amplifier 132-1, the power of the signal light input into the first optical amplifier 132-1 is considerably decreased, and reduces the signal light OSNR (optical signal to noise ratio), thereby possibly restricts the transmission distance. Furthermore, as shown in FIG. 25, when the optical gain equalizer 120 is inserted at the stage subsequent to the second optical amplifier 132-2, the limited maximum output power of the second optical amplifier 132-2 largely reduces the power of the signal light input into the transmission line. This possibly reduces the signal light OSNR (optical signal to noise ratio), and limits the transmission distance.

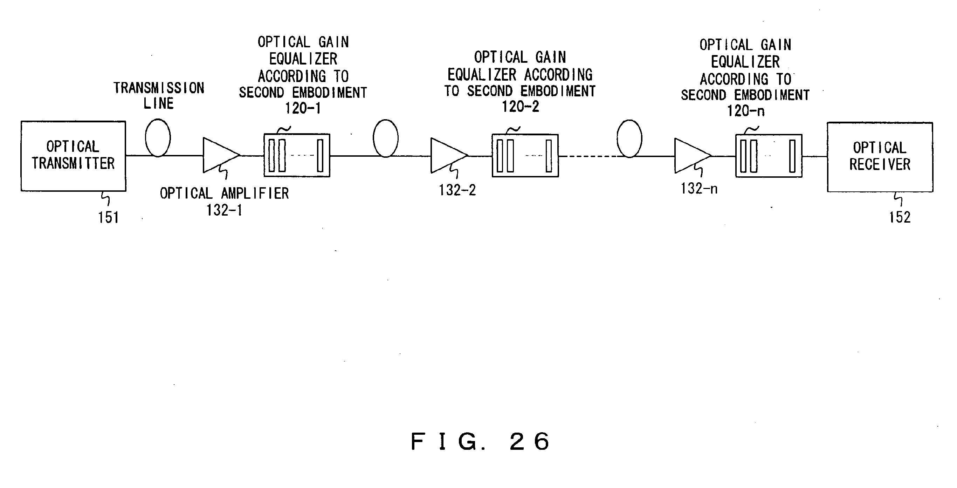

The configuration of the optical transmission system using the optical gain equalizer according to the second embodiment is described as the fourth embodiment of the present invention. FIG. 26 shows an example of the configuration of the optical transmission system according to the fourth embodiment of the present invention. The optical transmission system shown in FIG. 26 comprises the optical gain equalizers 120-1 through 120-n according to the second embodiment mounted at the stage subsequent to the optical'amplifiers 132-1 through 132-n (n is a natural number) provided in the middle of course between an optical transmission device 151 which is the source of signal light and an optical reception device 152 which is a destination. Each of the optical gain equalizers 120-1 through 120-n is controlled to compensate for the tilt of each of the optical amplifiers 132-1 through 132-n. Thus, the accumulation of the deviation of signal light power in the transmission system can be prevented, and the transmission distance can be extended.

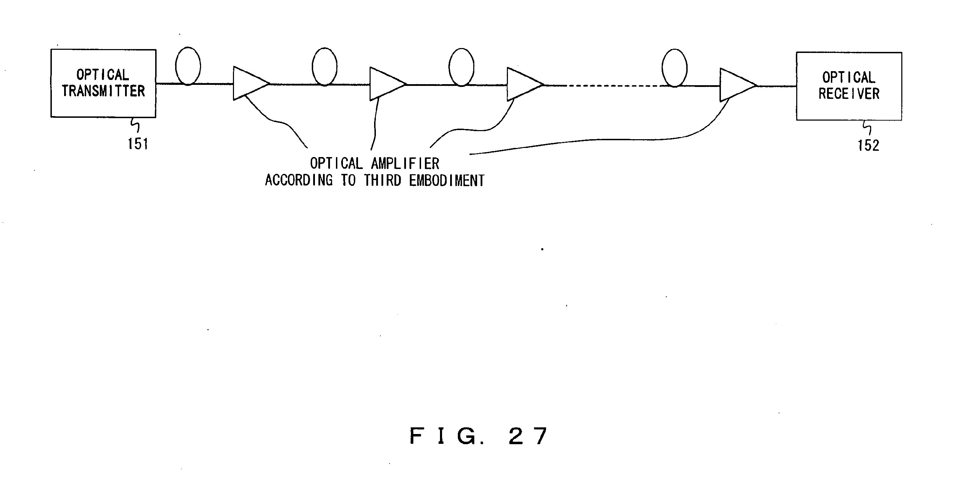

The configuration of the optical transmission system using the optical amplifier according to the third embodiment is described as a variation of the fourth embodiment of the present invention. FIG. 27 shows an example of the configuration of the optical transmission system according to a variation of the fourth embodiment of the present invention. The optical transmission system shown in FIG. 27 comprises an optical amplifier according to the third embodiment and a variation thereof provided in the middle of course between the optical transmission device 151 which is the source of signal light and the optical reception device 152 which is a destination. As described above by referring to the third embodiment, the power of the signal light output from each optical amplifier is controlled to be kept constant. Therefore, in the transmission system, the signal light power deviation accumulated by serially connecting a large number of optical amplifiers in the transmission system can be reduced, and the transmission distance can be extended.

As described above in detail, according to the present invention, in the optical filter configured by serially connecting three Mach-Zehnder interferometers, the amount of a change in optical path assigned to the two optical path change units to control the filter extinction ratio of the optical filter is set based on the filter average insertion loss of the optical filter, the filter extinction ratio, and the equation indicating the relationship between the amounts of changes in the optical path of the two optical path change units. Thus, the transmittance characteristics like a sine wave of the optical filter can be maintained, and simultaneously different amounts of changes in the optical path can be assigned to two optical path change units for control of the filter extinction ratio. Furthermore, the problem that when the filter extinction ratio of the optical filter is controlled, the filter average insertion loss also fluctuates can be successfully solved.

When an optical gain equalizer is configured by connecting a plurality of optical filters having the above-mentioned configuration, an optical gain equalizer capable of independently controlling the transmittance wavelength characteristics and the average insertion loss can be provided. Furthermore, the problem that when the transmittance characteristics of the optical gain equalizer is changed, the average insertion loss also fluctuates, thereby changing the operation condition of the optical amplifier provided at the subsequent stage can be solved.

Additionally, by mounting the optical gain equalizer having the above-mentioned configuration in the middle of relay spans of the optical transmission system, the ONSR of signal light can be improved, and the transmission distance can be successfully extended.

Furthermore, in the amplifier comprising the optical gain equalizer having the above-mentioned configuration and an optical signal monitor device for monitoring the signal light power level output from the optical amplifier and feeding it back, the optical gain equalizer is configured to control and obtain the even power level of the signal light output from the optical amplifier based on the monitor result, thereby requiring no VOA which has conventionally been required for the optical amplifier.

**Claims**

1. An optical filter, comprising:

   first, second, and third Mach-Zehnder interferometers;
   first and second optical path change means for changing an optical path of said first and second Mach-Zehnder interferometers; and
   control means for controlling a filter extinction ratio of the optical filter using a first optical path change means and a second optical path change means,

   wherein
   said control means sets an amount of a change in an optical path of said first optical path change means and an amount of a change in an optical path of said second optical path change means such that a filter average insertion loss of the optical filter, a filter extinction ratio, and amounts of changes in an optical path of said first and second optical path change means can satisfy a predetermined relationship.

2. The optical filter according to claim 1, wherein:

a first equation indicating the predetermined relationship is obtained by simultaneously solving:

a third equation indicating the relationship between a filter average insertion loss obtained by a second equation indicating output intensity of signal light at a waveguide terminal and an amount of a change in an optical path by said first and second optical path change means and
a fourth equation indicating the relationship between a filter extinction ratio obtained by the second equation and the amount of a change in optical path by said first and second optical path change means.

3. The optical filter according to claim 1 or 2,
wherein
said control means sets the amount of a change in an optical path by said first and second optical path change means such that the filter average insertion loss can be changed with the filter extinction ratio of the optical filter maintained at a predetermined value based on the relationship.

4. The optical filter according to claim 1, 2 or 3,
wherein
said control means sets the amount of a change in an optical path by said first and second optical path change means such that the filter extinction ratio can be changed with the filter average insertion loss of the optical filter maintained at a predetermined value based on the relationship.

5. The optical filter according to any one of the preceding claims, wherein
said control means independently controls the filter extinction ratio of the optical filter and the filter average insertion loss by setting the amount of a change in an optical path by said first and second optical path change means based on the relationship.

6. The optical filter according to any one of the preceding claims, wherein
said first and second optical path change means can change the optical path using a thermo-optical effect.

7. The optical filter according to any one of the preceding claims, wherein
said first and second optical path change means change the optical path using an electro-optical effect.

8. The optical filter according to any one of the preceding claims, wherein
said optical filter is used in an optical gain equalizer.

9. A control device which controls an optical filter,
wherein:

the optical filter comprises

first, second, and third Mach-Zehnder interferometers; and

said control device independently and individually sets amounts of changes in an optical path by first and second optical path change means.

10. An optical gain equalizer configured by coupling a plurality of optical filters, wherein
each optical filter comprises:

first, second, and third Mach-Zehnder interferometers; and
first and second optical path change means for individually changing an optical path of said first and second Mach-Zehnder interferometers to control a filter extinction ratio of the optical filter.

11. The optical gain equalizer according to claim 10,
wherein
said optical gain equalizer is provided at a stage subsequent to an optical amplifier provided in a middle of relay spans of an optical transmission system.

12. An optical amplifier, comprising:

first optical amplification means;

second optical amplification means provided at a stage subsequent to said first optical amplification means;

optical signal monitor means for monitoring an output power level of signal light output from said second optical amplification means; and

an optical gain equalizer which is configured by coupling a plurality of Mach-Zehnder interferometer type optical filters, and to which a monitor result of the output power level is fed back, wherein:

each Mach-Zehnder interferometer type optical filter comprises:

first, second, and third Mach-Zehnder interferometers; and

first and second optical path change means for individually changing an optical path of said first and second Mach-Zehnder interferometers to control a filter extinction ratio of the optical filter; and

average insertion loss of said optical gain equalizer is controlled using first and second optical path change means of each Mach-Zehnder interferometer type optical filter so that the output power level of the signal light can be evened.

13. The optical amplifier according to claim 12,
wherein
said optical gain equalizer is provided between said first and optical amplification means.

14. The optical amplifier according to claim 12 or 13,
wherein
said optical gain equalizer is provided in a stage preceding said first optical amplification means.

15. The optical amplifier according to claim 12, 13 or 14, wherein
said optical gain equalizer is provided between said second optical amplification means and said optical signal monitor means.

16. The optical amplifier according to any one of claims 12 through 15, further comprising:

optical branch means for performing automatic gain control on each optical amplification means and a photodiode at stages respectively preceding and subsequent to each optical amplification means.

17. The optical amplifier according to any one of claims 12 through 16, further comprising:

optical branch means for performing automatic output control on each optical amplification means and a photodiode at stages subsequent to each optical amplification means.

18. The optical amplifier according to any one of claims 12 through 17, wherein
said optical amplifier is provided in a middle of relay spans of an optical transmission system.

19. An optical filter control method wherein:

the optical filter comprises:

serially connected first, second, and third Mach-Zehnder interferometers; and
first and second optical path change means for changing an optical path of said first and second Mach-Zehnder interferometers to control a filter extinction ratio of the optical filter; and

an amount of a change in optical path of said first optical path change means and an amount of a change in an optical path of said second optical path change means are set such that a filter average insertion loss of the optical filter, a filter extinction ratio, and amounts of changes in an optical path of said first and second optical path change means can satisfy a predetermined relationship.

F I G. 1    PRIOR ART

AVERAGE INSERTION LOSS

SPECTRUM

FILTER ATTENUATION (dB)

OPTICAL FREQUENCY (THz)

192  193  194  195  196  197

2  4  6  8  10  12  14

F I G. 2   PRIOR ART

FIG. 3 PRIOR ART

EP 1 441 455 A2

F I G. 4    PRIOR ART

EP 1 441 455 A2

F I G. 5  PRIOR ART

EP 1 441 455 A2

INPUT SIDE
OPTICAL FIBER 21

OPTICAL PATH CHANGE UNIT 11

OUTPUT SIDE
OPTICAL FIBER 22

OPTICAL PATH CHANGE UNIT 11

$A_0$

$B_0$

OPTICAL PATH
CHANGE UNIT 12

OPTICAL PATH CHANGE UNIT 13

MACH-ZEHNDER INTERFEROMETER
TYPE OPTICAL FILTER 100-1

$A_2$

$B_2$

OPTICAL PATH
CHANGE UNIT 12

OPTICAL PATH CHANGE UNIT 13

MACH-ZEHNDER INTERFEROMETER
TYPE OPTICAL FILTER 100-2

F I G. 6    PRIOR ART

EP 1 441 455 A2

FIG. 7   PRIOR ART

MACH-ZEHNDER INTERFEROMETER TYPE OPTICAL FILTER 100

F I G. 8

EP 1 441 455 A2

FIG. 9

MACH-ZEHNDER INTERFEROMETER TYPE OPTICAL FILTER 100

INPUT SIDE OPTICAL FIBER 21

OUTPUT SIDE OPTICAL FIBER 22

OPTICAL PATH CHANGE UNIT 11

$A_0$

$A_1$

$B_0$

$B_1$

OPTICAL PATH CHANGE UNIT 12

ENLARGED VIEW

OPTICAL PATH
CHANGE UNIT 13

F I G. 1 0 A

OPTICAL
WAVEGUIDE 111

A'

$\oplus$

ELECTRODE 110

$\ominus$

Y
BRANCH
112

A'

Y BRANCH
112

OPTICAL WAVEGUIDE 111

VIEWED FROM ABOVE

F I G. 1 0 B

$\oplus$ ELECTRODE 110 $\ominus$ BUFFER LAYER
113

OPTICAL
WAVEGUIDE
111

ELECTRIC
FIELD

$LiNbO_3$
SUBSTRATE
OR
$LiTaO_3$
SUBSTRATE

SECTIONAL VIEW

F I G. 1 0 C

$\oplus$

$\ominus$

V

A

F I G. 1 0 D

EP 1 441 455 A2

EP 1 441 455 A2

FILTER ATTENUATION (dB)

SPECTRUM

AVERAGE INSERTION LOSS

192    193    194    195    196    197

OPTICAL FREQUENCY (THz)

F I G.  1 1

EP 1 441 455 A2

FILTER ATTENUATION (dB)

14

12

10

8

6

4

2

SPECTRUM

AVERAGE INSERTION LOSS

192          193          194          195          196          197

OPTICAL FREQUENCY (THz)

F I G.  1 2

FIG. 13

F I G. 1 4

EP 1 441 455 A2

F I G. 1 5

F I G. 1 6

F I G. 1 7

FIG. 18

EP 1 441 455 A2

F I G.  1 9

FIG. 20

EP 1 441 455 A2

OPTICAL GAIN EQUALIZER 120

OPTICAL BRANCH UNIT 131

IN

OUT

OPTICAL FILTER
100

OPTICAL SIGNAL MONITOR DEVICE

122

CONTROL CIRCUIT

123

F I G.  2 1

EP 1 441 455 A2

OPTICAL BRANCH UNIT 131-1

FIRST OPTICAL AMPLIFIER 132-1

OPTICAL GAIN EQUALIZER 120

131-2

131-3

OPTICAL AMPLIFIER 132-2

131-4

131-5

IN

OUT

OPTICAL FILTER 100

PD

135-1

AGC CONTROL

PD

135-2

PD

135-3

AGC CONTROL

PD

135-4

122

OPTICAL SIGNAL MONITOR DEVICE

CONTROL CIRCUIT

136

F I G. 2 2

FIG. 23

FIG. 24

EP 1 441 455 A2

FIG. 25

EP 1 441 455 A2

TRANSMISSION
LINE

OPTICAL GAIN
EQUALIZER
ACCORDING TO
SECOND EMBODIMENT
120-1

OPTICAL GAIN
EQUALIZER ACCORDING
TO SECOND EMBODIMENT
120-2

OPTICAL GAIN
EQUALIZER
ACCORDING TO
SECOND EMBODIMENT
120-n

OPTICAL
TRANSMITTER

OPTICAL AMPLIFIER
132-1

132-2

132-n

OPTICAL
RECEIVER

151

152

F I G. 2 6

EP 1 441 455 A2

OPTICAL AMPLIFIER
ACCORDING TO THIRD EMBODIMENT

151

152

F I G. 2 7